# FASCICULE DE BREVET EUROPEEN

(11) **EP 1 550 308 B1**
(45) Date de publication et mention de la délivrance du brevet: **23.11.2011**
(21) Numéro de dépôt: 03798331.9
(22) Date de dépôt: 19.09.2003
(51) Int. Cl.: H04N 7/16

(54) **METHODE POUR LE CONTROLE D'APPARIEMENT MULTIPLE**
MEHRFACH-ANPASSUNGSSTEUERVERFAHREN
MULTIPLE MATCHING CONTROL METHOD

(30) Priorité: 24.09.2002 CH 160502
(43) Date de publication de la demande: 06.07.2005
(73) Titulaire: Nagravision S.A., 1033 Cheseaux-sur-Lausanne (CH)
(72) Inventeur: KSONTINI, Rached, CH-1018 Lausanne (CH); SASSELLI, Marco, CH-1803 Chardonne (CH)
(74) Mandataire: Wenger, Joel-Théophile
(86) Numéro de dépôt international: PCT/IB2003/004190
(87) Numéro de publication internationale: WO 2004/030361

(56) Documents cités:
- EP-A2- 1 134 976
- WO-A-00/59222
- WO-A-01/06785
- WO-A-99/43120
- WO-A1-00/04718
- WO-A1-96/41470
- WO-A1-02/052515
- US-A- 6 026 165
- US-A1- 2002 041 337
- KENT BBN IAB IRTF PSRG S ET AL: "Privacy Enhancement for Internet Electronic Mail: Part II: Certificate-Based Key Management; rfc1422.txt", IETF STANDARD, INTERNET ENGINEERING TASK FORCE, IETF, CH, 1 February 1993 (1993-02-01), XP015007209, ISSN: 0000-0003

## Description

La présente demande concerne le domaine de l'appariement entre un module de sécurité et un module hôte, notamment afin de sécuriser les communications entre ces deux modules.

L'appariement est un mécanisme connu qui consiste à partager un secret unique à deux dispositifs rendant la communication ente ces deux dispositifs inaccessible pour tout autre dispositif.

Cet appariement est décrit dans la demande EP1078524 et permet de lier un module de sécurité à un récepteur grâce à la présence d'une clé de chiffrement unique connue de ces deux seuls éléments.

Dans un environnement autorisant la connexion d'un module de sécurité sur plusieurs appareils hôtes, un tel appariement n'est pas possible car trop limitatif.

Le document WO02/052515 décrit une solution mettant en oeuvre le contrôle de l'appariement par un centre de gestion. Le module de sécurité peut être apparié à n'importe quel appareil pour autant que le centre de gestion l'y autorise. Une telle solution suppose l'existence d'un canal permettant au centre de gestion d'adresser un ou plusieurs messages au module de sécurité.

Le document WO00/04718A1 décrit une méthode d'établissement d'un canal de communication sécurisé entre deux décodeurs audio/vidéo appartenant à un même abonné. Un premier décodeur maître connecté à une carte primaire reçoit d'un centre de gestion un message d'administration EMM comprenant un certificat formé d'une clé publique de transmission encryptée par une clé privée du centre de gestion et conjointement au certificat la clé privée de transmission. Lorsque le décodeur maître établit une communication via une liaison IEEE 1394 avec un second décodeur esclave connecté à une carte secondaire, la carte primaire transmet le certificat à la carte secondaire possédant une clé publique du centre de gestion. La carte secondaire décrypte le certificat avec la clé publique du centre de gestion pour obtenir la clé publique de transmission. Cette dernière est ainsi associée de manière unique au couple formé par les deux décodeurs maître et esclave équipés respectivement des cartes primaire et secondaire.

Le document US6026165A décrit un système et une méthode de communication sécurisée entre un émetteur et une pluralité de récepteurs. Les messages transmis comprennent une portion de données, un identificateur, un numéro de séquence et des données de contrôle CRC. La portion de données est encryptée par une super-clé qui est une combinaison d'une clé aléatoire et d'un numéro de séquence stocké dans une mémoire de l'émetteur. La super-clé est aussi stockée dans le récepteur grâce à un procédé d'enregistrement. Cette super-clé est différente pour chaque émetteur et ne peut pas être considérée comme étant commune à tous les récepteurs. A la réception d'un message, le décodeur du récepteur cherche l'identificateur non encrypté de l'émetteur et trouve dans sa mémoire la clé correspondante et le numéro de séquence pour reconstituer la super-clé. Cette dernière permet de décrypter le numéro de séquence encrypté du message reçu. Le récepteur compare le numéro de séquence stocké et le numéro de séquence décodé pour valider les données du message.

Le document US2002/041337A1 décrit une méthode et un appareil pour générer des clés servant à encrypter des messages échangés entre deux dispositifs. Au moins une clé est basée sur un identifiant d'un dispositif. Le message transmis comprend un entête contenant un identifiant du dispositif et une partie utile constituée par les données encryptées. Le dispositif recevant le message détermine la clé permettant de décrypter les données encryptées à partir de l'identifiant contenu dans l'en-tête.

Le document WO96/4170A1 décrit un système et un procédé de gestion d'une mémoire de guide de programme de télévision consistant à effacer une information de programme stockée dans la mémoire la moins utile de manière à libérer de l'espace mémoire requis par le système. Lors de la mise à jour d'une programmation, le système effectue une opération de nettoyage de la mémoire en deux phases. Lors de la première phase, un balayage de la mémoire identifie des informations de programmation obsolètes et lorsque l'espace mémoire est insuffisant pour une mise à jour, le système effectue une seconde phase de triage lors de laquelle les informations de programmation sont classées par ordre de priorité selon des règles prédéfinies. L'effacement est réalisé en débutant par l'information la moins utile ou de priorité la plus basse, jusqu'à l'obtention d'un espace suffisant pour la mise à jour.

Le document EP1134976A2 décrit une méthode de traitement d'information et un récepteur d'informations apte à afficher des l'éléments d'information dans un ordre optimal. Des informations peuvent être soit stockées dans une mémoire selon l'ordre optimal, soit effacées de la mémoire. L'information est désignée par un attribut indiquant une catégorie d'information. Lorsque l'information stockée dans la mémoire est accédée, le nombre d'accès est compté pour chaque catégorie en utilisant l'attribut. Une fréquence d'accès par des utilisateurs est déterminée pour chaque élément d'information d'après le nombre compté pour chaque catégorie d'information accédée. Des priorités d'accès sont également définies d'après la fréquence d'accès des utilisateurs. Ainsi des informations de basse priorité d'accès sont effacées en premier pour être remplacée par de nouvelles informations tandis que les informations de priorité d'accès élevée sont filtrées conservées dans la mémoire.

Le but de la présente invention est donc d'apparier un module de sécurité avec un ou plusieurs appareils hôtes dans un environnement dans lequel soit l'appel à un centre de gestion n'est pas possible lors de l'appariement, soit aucun canal n'existe entre le centre de gestion et le module de sécurité.

Ce but est atteint par une méthode telle que décrite par la revendication 1

Deux caractéristiques importantes sont contenues dans cette méthode. La première est la possibilité de mémoriser dans le module de sécurité (premier dispositif) plusieurs données d'appariement. Le nombre maximum sera volontairement limité pour empêcher qu'un même module puisse s'apparier avec un nombre illimité d'appareils hôtes.

La deuxième caractéristique est la manière de créer la clé d'appariement. A l'origine, rien ne destine un module de sécurité particulier à s'apparier avec un appareil hôte particulier. C'est pourquoi, selon une première variante, un identifiant unique de l'appareil hôte (second dispositif) est encrypté par une clé qui est contenue dans chaque module de sécurité. Cet identifiant peut être le numéro de série de l'appareil hôte ou une clé de chiffrement ou un numéro généré aléatoirement lors de la personnalisation de chaque appareil hôte

Selon une deuxième variante, la clé d'appariement est déjà contenue dans le cryptogramme transmis par le deuxième dispositif. Dans un tel cas, la clé d'appariement est une clé unique, propre à l'appareil hôte et ne dépend en rien du module de sécurité

Si un nouvel appariement est effectué, les données d'appariement seront enregistrées et occuperont un des emplacements prévus pour les différents appariements que peut accepter un module de sécurité. Les données d'appariement sont par exemple le numéro de série de l'appareil hôte accompagné de la clé d'appariement.

Du fait que le nombre d'emplacements est limité, il est probable que le module de sécurité soit connecté avec un nouvel appareil hôte alors que tous les emplacements sont utilisés. Pour déterminer l'emplacement à remplacer, il existe plusieurs mécanismes à savoir:
- un compteur d'activité associé à chaque emplacement. A chaque négociation d'appariement entre le module de sécurité et l'appareil hôte, ce compteur est incrémenté. Ainsi, le plus petit compteur détermine l'emplacement le moins utilisé. C'est cet emplacement qui sera remplacé par le nouvel appariement. Par négociation d'appariement, on entend en général la mise sous tension du module hôte et la requête d'information de la part du module de sécurité.
- un compteur de chronologie d'appariement associé à chaque emplacement. A chaque négociation d'appariement, le compteur correspondant prend la valeur du plus haut de tous les compteurs plus un, sauf si ce compteur est déjà le plus haut, auquel cas il n'est pas modifié. Ainsi, le compteur ayant la plus petite valeur indique l'emplacement de l'appariement le plus ancien. C'est cet emplacement qui sera remplacé par le nouvel appariement.

Dans une forme de réalisation, tout nouvel appariement ou tout changement d'appariement (ceci survenant lorsqu'il n'y a plus d'emplacement libre) est sujet à l'introduction d'un code secret (PIN code). A la première insertion du module de sécurité dans l'appareil hôte, le module de sécurité initie une séquence auprès de l'appareil hôte qui selon ses moyens d'affichage, demande à l'utilisateur l'introduction de ce code secret. Ce n'est que si ce code est correctement fourni par l'utilisateur, puis transféré vers le module de sécurité, que ce dernier acceptera ce nouvel appariement.

Selon les variantes choisies, il est possible d'exiger ce code secret pour chaque nouvel appariement sans relation avec l'occupation des emplacements de la mémoire. Dans une autre variante, il est possible de faire intervenir le code secret lorsqu'il est question de remplacer un emplacement déjà occupé.

Plusieurs variantes sont prévues pour déterminer la validité de ce code secret. Dans une première variante simplifiée, le code secret est constant pour un module de sécurité et est distribué avec ledit module.

Selon une deuxième variante non revendiquée et présentée seulement à titre d'illustration afin de mieux de comprendre le contexte général de l'invention, l'utilisateur appelle ou se connecte à un centre de gestion et lui transmet le numéro unique du module de sécurité et de l'appareil hôte. Ce centre calcule un code secret selon un algorithme prenant en compte les deux variables que sont les deux numéros uniques. Cet algorithme est également contenu dans le module de sécurité pour vérifier la conformité du code secret. L'appel au centre de gestion peut s'effectuer préalablement à l'appariement afin de disposer du code nécessaire lorsqu'il sera requis au moment de la connexion du module avec l'appareil hôte.

Selon une troisième variante, l'algorithme utilisé pour le calcul du code est basé sur, le numéro unique du module de sécurité et d'un indice incrémental. Ce code est ensuite combiné avec le numéro unique de l'appareil hôte afin d'obtenir le code secret qui est ensuite transmis à l'utilisateur pour autoriser son nouvel appariement.

Le code peut être déterminé selon la formule : CS = G(K , (F^{N}(UA))) = G(K , F((F^{N-1}(UA)))), ou CS est le code secret, UA le numéro unique du module de sécurité, N l'indice incrémental, K le numéro unique de l'appareil hôte, F une fonction de chiffrement et G une fonction qui fait intervenir K dans le calcul du CS.

De cette manière, le code secret change inévitablement à chaque appariement. Soit le résultat de la fonction F^{N-1}(UA), soit la valeur de l'indice N est stocké en mémoire du module pour être utilisée comme départ lors du prochain appariement. Pour que le centre puisse calculer le bon code secret, il est nécessaire que le centre soit synchronisé avec le module de sécurité. Pour ce faire, l'utilisateur, lors de la requête, peut, par exemple, communiquer au centre la valeur de l'indice N ou le résultat de la fonction F^{N-1}(UA), préalablement transmis par le module de sécurité. Bien entendu, l'utilisateur doit aussi transmettre le numéro unique du module de sécurité et de l'appareil hôte au centre de gestion.

Néanmoins, si la valeur de l'indice N dans le module de sécurité n'est pas accessible au centre de gestion, ce dernier peut transmettre un code secret qui ne corresponde pas nécessairement au dernier indice du module de sécurité. Suite à cet éventuel décalage entre l'indice stocké dans le module de sécurité et l'indice stocké au centre de gestion, un code secret correctement calculé au centre de gestion peut être rejeté par le module de sécurité.

Dans ce cas, il est possible de resynchroniser le module de sécurité. Si par exemple, le centre de gestion a fourni un code secret à partir du numéro de l'appareil hôte de l'utilisateur et du cryptogramme d'indice incrémental 12, soit celui qui est dans le centre de gestion, et si le cryptogramme mémorisé dans le module de sécurité est d'indice 8, alors le module va calculer les codes secrets correspondants aux indices 8, 9, 10, 11, 12 pour constater que le cryptogramme provenant du code introduit manuellement correspond à un cryptogramme valide d'indice plus élevé. Cette constatation signifie que le centre de gestion a auparavant délivré quatre codes secrets que l'utilisateur du module de sécurité n'a finalement pas utilisé.

Il est certain que la différence d'indice entre l'indice courant (8 dans notre exemple) et l'indice du centre de gestion (12 dans notre exemple) sera limitée à un nombre acceptable. Il n'est pas question de balayer les milliers de possibilités dans l'espoir de trouver le bon code secret.

A noter que cette troisième variante inclut la possibilité de ne pas faire intervenir le numéro unique de l'appareil hôte dans le calcul du code secret, en définissant CS = (F^{N}(UA)) qui correspond au cas où la fonction G précédemment citée est définie par G(x,y) = y. Cette variante est intéressante si l'on souhaite séparer le code secret du numéro de l'appareil hôte. En effet, s'il est aisé de connaître le numéro du module de sécurité, par définition, un module aisément transportable, il est plus difficile de connaître le numéro unique de l'appareil hôte, en particulier si l'on doit obtenir le code secret avant de connecter les deux éléments.

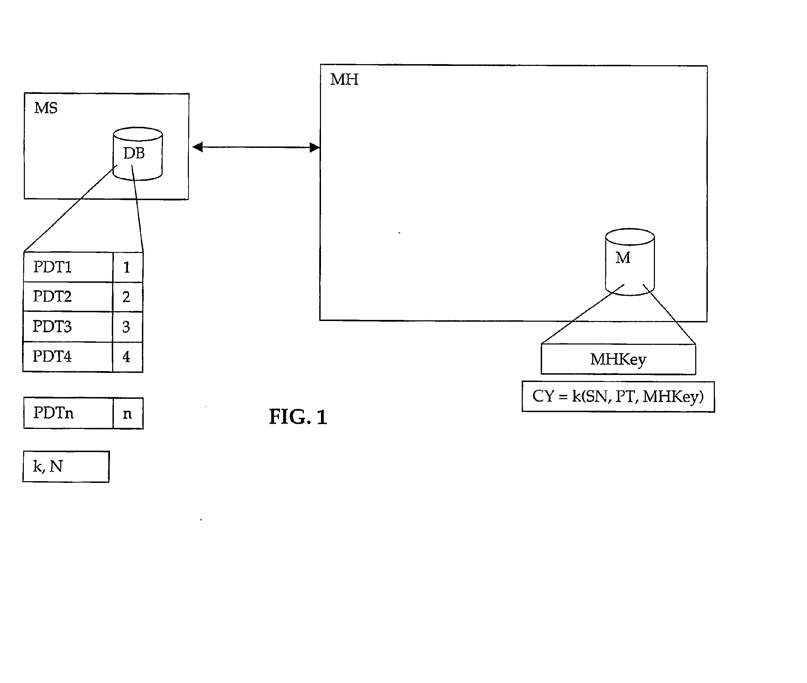

L'invention sera mieux comprise grâce à la description détaillée qui va suivre et qui se réfère à la figure unique qui est donnée à titre d'exemple nullement limitatif, et qui illustre les deux éléments principaux et les données qu'ils contiennent.

Le module de sécurité MS comprend une base de données DB sécurisée dans laquelle se trouve entre autre les données d'appariement. Ces données référencées PDT1 à PDTn occupent les places mémoires 1 à n. Noter que le nombre n d'emplacements prévus dans le module MS peut être égal à 1.

Cette base DB va également contenir la clé k commune à tous les modules de sécurité MS et permettant de décrypter le cryptogramme CY ainsi que l'indice N du nombre d'appariements précédemment exécutés.

Ce dernier est contenu initialement dans le module hôte MH dans une mémoire M qui peut être soit sécurisée, soit de type librement accessible. Il est tout de même préférable que cette mémoire soit protégée et difficilement accessible afin d'éviter qu'un appareil hôte ne se fasse passer pour un autre.

Ce cryptogramme CY est encrypté par la clé k et contient, dans une forme de réalisation, le numéro de série SN et une marque PT de valeur connue du module de sécurité. Cette marque PT permet au module de sécurité de s'assurer que le cryptogramme est valide. Cette marque PT est commune à tous les cryptogrammes. Selon une autre variante, elle peut être propre à l'appareil hôte. Le cryptogramme CY peut aussi contenir la clé d'appariement MHKey propre à l'appareil hôte, qui sera ensuite utilisée pour sécuriser la transmission d'informations entre le module MS et l'appareil hôte. Par exemple, une fois cette clé connue des deux modules, une clé de session KS peut être négociée et utilisée pour encrypter la communication. Bien entendu, dans un tel cas, la clé MHKey doit aussi être stockée dans la mémoire M de l'appareil hôte et cette mémoire doit donc être sécurisée.

Dans la base de données DB du module de sécurité MS, les données PDT1 à PDTn comprennent un compteur d'activité ou de chronologie tel que décrit plus haut. Rappelons que ces compteurs permettent de déterminer l'emplacement à remplacer au cas où tous les emplacements sont utilisés. Dans le cas où des compteurs d'activité sont utilisés, prenons l'exemple de trois emplacements, soit PDT1 à PDT3 respectivement occupés par des appariements effectués par des modules hôtes MHA, MHB et MHC. A chaque négociation d'un appariement entre le module de sécurité MS et le module MHC par exemple, le compteur CPT3 sera incrémenté.

Dans les formes d'exécution utilisant une clé de session KS générée à partir de la clé d'appariement KA, il est à noter que cet appariement peut évoluer dynamiquement c'est à dire que la clé de session KS est nécessairement changée après un certain temps d'utilisation; sur la base des éléments transmis lors de l'appariement entre ces deux entités (clé d'appariement, clé du module hôte MHKey), une nouvelle clé de session est générée. On peut dès lors compter le nombre de clés de session déjà générées et considérer ce nombre comme compteur d'activité.

Lorsqu'une nouvelle demande d'appariement est requise au module de sécurité, il va déterminer le compteur d'activité le plus petit et libérer cet emplacement. Bien entendu, le module de sécurité contient aussi toute l'information nécessaire au calcul et à la vérification des codes secrets.

## Revendications

1. Méthode de contrôle d'appariement entre un module de sécurité (MS) amovible et un appareil hôte (MH) connecté au module de sécurité (MS), ledit module de sécurité comprenant une base de données (DB) sécurisée contenant au moins deux emplacements de mémoire (PDT1, PDT2), chacun étant occupé par des données d'appariement dudit module de sécurité (MS) avec un appareil hôte (MH) donné, et une clé secrète (k) commune à une pluralité de modules de sécurité incluant le module de sécurité (MS), ledit appariement sécurisant des données échangées entre le module de sécurité (MS) et l'appareil hôte (MH) à l'aide d'une clé d'appariement unique (KA), ladite méthode est **caractérisée en ce qu'**elle comprend les étapes suivantes :
- vérifier l'appariement entre le module de sécurité (MS) et l'appareil hôte (MH) et utiliser la clé d'appariement unique (KA) si l'appariement est déjà effectué, dans la négative,
- rechercher dans la base de données (DB) du module de sécurité (MS) un emplacement de mémoire (PDT) vide parmi les emplacements de mémoire réservés aux données d'appariement, et lorsque tous les emplacements de mémoire (PDT) sont utilisés, déterminer un emplacement de mémoire à remplacer par l'une des deux étapes suivantes :
- lire un compteur d'activité (CPT) associé à l'emplacement de mémoire (PDT), ledit compteur d'activité (CPT) étant incrémenté à chaque négociation d'appariement entre le module de sécurité (MS) et l'appareil hôte (MH), et remplacer les données d'appariement à l'emplacement de mémoire déterminé par la valeur du compteur d'activité (CPT) indiquant l'emplacement de mémoire le moins utilisé,
- lire un compteur de chronologie d'appariement associé à chaque emplacement de mémoire (PDT), ledit compteur de chronologie d'appariement étant incrémenté à chaque négociation d'appariement entre le module de sécurité (MS) et l'appareil hôte (MH), et remplacer les données d'appariement à l'emplacement de mémoire déterminé par la valeur du compteur de chronologie indiquant l'appariement le plus ancien,
- initier une procédure d'appariement en transmettant un cryptogramme (CY) stocké dans l'appareil hôte (MH) au module de sécurité (MS), ledit cryptogramme (CY) étant formé par un ensemble contenant un identifiant (SN) propre à l'appareil hôte (MH), et la clé d'appariement unique (KA) ledit ensemble étant encrypté par la clé secrète (k),
- décrypter par le module de sécurité (MS) le cryptogramme (CY) avec la clé secrète (k),
- extraire du cryptogramme (CY) l'identifiant (SN) de l'appareil hôte (MH) et la clé d'appariement (KA),
- stocker, à l'emplacement de mémoire (PDT) préalablement déterminé dans la base de donnée (DB) du module de sécurité (MS), des données d'appariement comprenant l'identifiant (SN) de l'appareil hôte (MH) et la clé d'appariement (KA), et incrémenter le compteur d'activité (CPT) ou le compteur de chronologie d'appariement associé au dit emplacement de mémoire (PDT).

2. Méthode selon la revendication 1, **caractérisée en ce que** l'appariement est conditionné à l'introduction d'un code secret (CS) dans l'appareil hôte (MH), ledit code secret (CS) étant transmis au module de sécurité (MS) et vérifié par ledit module de sécurité (MS).

3. Méthode selon la revendication 2, **caractérisée en ce que** le code secret (CS) est propre et unique à chaque module de sécurité (MS).

4. Méthode selon la revendication 2, **caractérisée en ce que** le code secret (CS) requis est différent à chaque appariement.

## Claims

1. Method to control the pairing between a removable security module (MS) and a host apparatus (MH) connected to the security module (MS), said security module comprising a secured database (DB) containing at least two memory locations (PDT1, PDT2), each being occupied by data for pairing said security module (MS) with a given host apparatus (MH), and a secret key (k) common to a plurality of security modules including said security module (MS), said pairing data securing the data exchanged between the security module (MS) and the host apparatus (MH) by means of a unique pairing key (KA), said method is **characterized in that** it comprises following steps:
- verifying the pairing between the security module (MS) and the host apparatus (MH) and using the unique pairing key (KA) when the pairing has been already carried out, in the negative case,
- searching in the database (DB) of the security module (MS) a free memory location (PDT) among memory locations reserved for the pairing data, and when all memory locations (PDT) are used, determining a memory location to be replaced by one of the two following steps:
- reading an activity counter (CPT) associated with the memory location (PDT), said activity counter (CPT) being incremented at each pairing negotiation between the security module (MS) and the host apparatus (MH), and replacing the pairing data at the determined memory location by the value of the activity counter (CPT) indicating the less used memory location,
- reading a pairing chronology counter associated with each memory location (PDT), said pairing chronology counter being incremented at each pairing negotiation between the security module (MS) and the host apparatus (MH), and replacing the pairing data at the determined memory location by the value of the chronology counter indicating the oldest pairing,
- initiating a pairing procedure by transmitting a cryptogram (CY) stored in the host apparatus (MH) to the security module (MS), said cryptogram (CY) being formed by a set containing an identifier (SN) specific to the host apparatus (MH) and the unique pairing key (KA), said set being encrypted by the secret key (k),
- decrypting by the security module (MS), the cryptogram (CY) with the secret key (k),
- extracting from the cryptogram (CY) the identifier (SN) of the host apparatus (MH) and the pairing key (KA),
- storing at the memory location (PDT) previously determined in the database of the security module (MS), pairing data comprising the identifier (SN) of the host apparatus (MH) and the pairing key (KA), and incrementing the activity counter (CPT) or the pairing chronology counter associated to said memory location (PDT).

2. Method according to claim 1, **characterized in that** the pairing is conditioned by the introduction of a secret code (CS) in the host apparatus (MH), said secret code (CS) being transmitted to the security module (MS) and verified by said security module (MS).

3. Method according to claim 2, **characterized in that** the secret code (CS) is specific and unique to each security module (MS).

4. Method according to claim 2, **characterized in that** the required secret code (CS) is different at each pairing.

## Patentansprüche

1. Methode zur Verknüpfungskontrolle zwischen einem entfernbaren Sicherheitsmodul (MS) und einem Host-Gerät (MH), das mit dem Sicherheitsmodul (MS) verbunden ist, wobei das Sicherheitsmodul eine gesicherte Datenbank (DB) umfasst, die mindestens zwei Speicherplätze (PDT1 PDT2) enthält, von denen jeder von Verknüpfungsdaten des genannten Sicherheitsmoduls (MS) zu einem gegebenen Host-Gerät (MH) eingenommen wird, und einen geheimen Schlüssel (k), den eine Vielzahl von Sicherheitsmodulen gemeinsam haben, einschließlich des Sicherheitsmoduls (MS), wobei die Verknüpfung zwischen dem Sicherheitsmodul (MS) und dem Host-Gerät (MH) ausgetauschte Daten mit Hilfe eines einzigen Verknüpfungsschlüssels (KA) sichert; besagte Methode ist **gekennzeichnet dadurch, dass** sie die folgenden Schritte umfasst:
- die Verknüpfung zwischen dem Sicherheitsmodul (MS) und dem Host-Gerät (MH) prüfen und den einzigen Verknüpfungsschlüssel (KA) benutzen, falls die Verknüpfung schon durchgeführt ist, falls nicht,
- in der Datenbank (DB) des Sicherheitsmoduls (MS) einen leeren Speicherplatz (PDT) unter den Speicherplätzen für die Verknüpfungsdaten suchen, und wenn alle Speicherplätze (PDT) benutzt sind, einen Speicherplatz ersetzen, durch einen der beiden folgenden Schritte:
- Ablesung eines Aktivitätszählers (CPT), der mit dem Speicherplatz (PDT) verbunden ist und bei jeder Verknüpfungsverhandlung zwischen dem Sicherheitsmodul (MS) und dem Host-Gerät (MH) erhöht wird, und Ersetzung der Verknüpfungsdaten auf dem Speicherplatz, der durch den Wert des Aktivitätszählers (CPT) bestimmt wurde, der den am wenigsten benutzten Speicherplatz angibt,
- Ablesung eines Verknüpfungschronologiezählers, der mit jedem Speicherplatz (PDT) verbunden ist und bei jeder Verknüpfungsverhandlung zwischen dem Sicherheitsmodul (MS) und dem Host-Gerät (MH) erhöht wird, und Ersetzung der Verknüpfungsdaten auf dem Speicherplatz, der durch den Wert des Aktivitätszählers (CPT) bestimmt wurde, der die älteste Verknüpfung angibt,
- Beginn einer Verknüpfungsprozedur, die ein im Host-Gerät (MH) gespeichertes Kryptogramm (CY) an das Sicherheitsmodul (MS) überträgt, wobei das Kryptogramm (CY) durch eine Einheit gebildet ist, die eine spezifische Identifizierung (SN) des Host-Geräts (MH) und den einzigen Verknüpfungsschlüssel (KA) enthält und durch den geheimen Schlüssel (k) verschlüsselt ist,
- Entschlüsselung des Kryptogramms (CY) durch das Sicherheitsmodul (MS) mit dem geheimen Schlüssel (k),
- Entnahme der Identifizierung (SN) des Host-Geräts (MH) und des Verknüpfungsschlüssels (KA) aus dem Kryptogramm (CY),
- Speicherung, auf dem vorher bestimmten Speicherplatz (PDT) in der Datenbank (DB) des Sicherheitsmoduls (MS), der Verknüpfungsdaten mit der Identifizierung (SN) des Host-Geräts (MH) und dem Verknüpfungsschlüssel (KA), und Erhöhung des Aktivitätszählers (CPT) oder des Verknüpfungschronologiezählers, der mit besagtem Speicherplatz (PDT) verbunden ist.

2. Methode nach Anspruch 1, **gekennzeichnet dadurch dass** die Verknüpfung an die Einführung eines Geheimcodes (CS) in das Host-Gerät (MH) gebunden ist, wobei der Geheimcode (CS) an das Sicherheitsmodul (MS) übertragen und von dem Sicherheitsmodul (MS) geprüft wird.

3. Methode nach Anspruch 2, **gekennzeichnet dadurch, dass** der Geheimcode (CS) spezifisch und einzig für jedes Sicherheitsmodul (MS) ist.

4. Methode nach Anspruch 2, **gekennzeichnet dadurch, dass** der benötigte Geheimcode (CS) bei jeder Verknüpfung verschieden ist.
